# EUROPEAN PATENT SPECIFICATION

(11) **EP 2 723 185 B1**
(45) Date of publication and mention of the grant of the patent: **08.04.2015**
(21) Application number: 12728176.4
(22) Date of filing: 22.05.2012
(51) Int. Cl.: A23G 3/22, A23G 1/20, A23G 1/18

(54) **MACHINE FOR TEMPERING CHOCOLATE**
VORRICHTUNG ZUR TEMPERIERUNG VON SCHOKOLADE
MACHINE À TEMPÉRER LE CHOCOLAT

(30) Priority: 27.06.2011 IT MI20111164
(43) Date of publication of application: 30.04.2014
(73) Proprietor: G.S.G. S.r.l., 36075 Montecchio Maggiore - Vicenza (IT)
(72) Inventor: GENESIO, Bravo, I-36050 Sovizzo-Vicenza (IT)
(74) Representative: Martegani, Franco
(86) International application number: PCT/EP2012/002194
(87) International publication number: WO 2013/000529

(56) References cited:
- GB-A- 491 734
- GB-A- 863 469
- GB-A- 977 996

## Description

The present invention relates to a chocolate tempering machine.

Chocolate tempering machines comprising a tank containing the chocolate being processed, are well-known to experts in the field. The tank is connected by means of an outflow tube to a pump (normally of the worm-conveyor type), in turn connected to a tube terminating in a distribution spout. Said spout is above the tank, thus causing a free fall of the chocolate into the underlying tank, in a kind of closed circuit.

The operator subsequently places the products to be coated (for example fruit or pastry products), or moulds, under the jet of chocolate leaving the spout.

The functioning of a tempering machine is briefly the following. When the machine is switched on, the chocolate (initially in solid form) is first melted in the tank (at a temperature ranging from 40°C to 55°C), then rapidly cooled in the worm-conveyor pump (at a temperature varying in relation to the type of chocolate being processed) and finally maintained at a preselected temperature (so-called crystallization temperature) for an indefinite time.

The tempered chocolate leaving the distribution spout, if not used, is sent by natural falling into the underlying tank to be heated to the preselected temperature and then re-admitted into circulation.

If, on the other hand, the chocolate is removed from the spout and left to solidify, a perfectly glossy product is obtained, having a uniform colour and organoleptically perfect, thanks to the formation of crystal particulates of cocoa butter (integral part of the chocolate mixture).

In processing, in order to obtain various forms of chocolate products (e.g. small chocolates, tablets or similar products), specific moulds are used into which the tempered chocolate is poured (by simply positioning them under the spout of the machine): these moulds are normally made of a plastic material but can also be made of metal.

Known tempering machines also comprise (normally) a vibrating support (technically called a table or belt) consisting of flat vibrating surfaces covered with rubber positioned at the side of the tank and spout, so as not to interfere with the jet of tempered chocolate.

These vibrating surfaces are connected by a heated metallic grid, which is also part of the vibrating support, positioned exactly above the tank.

The function of the vibrating surfaces is to effect a correct stabilization and distribution of the chocolate in the moulds: the latter, in fact, after being filled with chocolate are positioned on the vibrating surfaces thus causing a vibration of the chocolate (still melted) contained in the mould.

This vibration allows the chocolate to become uniform and stabilized, and also enables the air bubbles entrapped during the processing to be discharged, thus obtaining a product whose definite appearance is compact.

The mould is left to vibrate for a few tens of seconds and then positioned outside the belt where the chocolate can thicken and subsequently solidify.

A problem arises however when filled chocolates or filled tablets are to be produced, or when it is generally necessary to coat the mould with a thin layer of tempered chocolate.

In these cases, in fact, after filling and vibrating the mould, this must be emptied to eliminate the excess of raw material (chocolate).

For this purpose, the mould is overturned and positioned on the grid, so that the excess chocolate becomes detached from the mould (thanks to the vibration of the support) and falls by gravity into the tank.

The vibrations in this case are necessary for allowing the largest possible quantity of chocolate to become detached (and then fall) from the mould into the tank, so that only a very fine layer remains attached to the mould.

For this purpose, the metallic rods forming the grid are heated (usually by means of an electric resistance in their interior), so that the chocolate that becomes detached from the mould does not remain attached or does not solidify but falls into the tank.

Although this solution is generally useful, it does have various drawbacks however.

First of all, in fact, the mould resting on the vibrating grid produces considerable acoustic interference: the noise it creates is not only unpleasant but has such a high intensity that it becomes difficult to hear a conversation on the part of whoever is working near this apparatus during its functioning.

A further drawback of these machines relates to the fact that the moulds, situated on the grid during the vibration of the latter, tend to move freely due to the vibrations, moving on the grid itself.

As the jet of chocolate cannot be stopped (in this case the machine would have to be switched off) and as the dimensions of the grid are relatively small, this random movement of the moulds creates the risk of their passing under the jet of chocolate thus jeopardizing the whole operation.

An objective of the present invention is to provide a chocolate tempering machine which is able to overcome the drawbacks of the known art mentioned above.

This objective is achieved by means of a machine according to claim 1.

The Applicant has proposed separating the functions of the supporting surface which, in the known art, was contemporaneously heated and vibrating, causing the problem of noise described above.

Further advantageous characteristics of the present invention are contained in the enclosed subclaims which are an integral part of the present description.

The structural and functional characteristics of the invention, and its advantages with respect to the known art, will appear more evident from the following description, referring to the enclosed drawings which show a possible practical embodiment of the invention itself, and in particular:
- figure 1 is a view in perspective of the machine according to the present invention;
- figure 2 is a raised front view:of the machine of the previous figure;

- figure 3 is an enlarged detail of the machine of the previous figures;
- figure 4 is an enlarged detail of the previous figure in perspective.

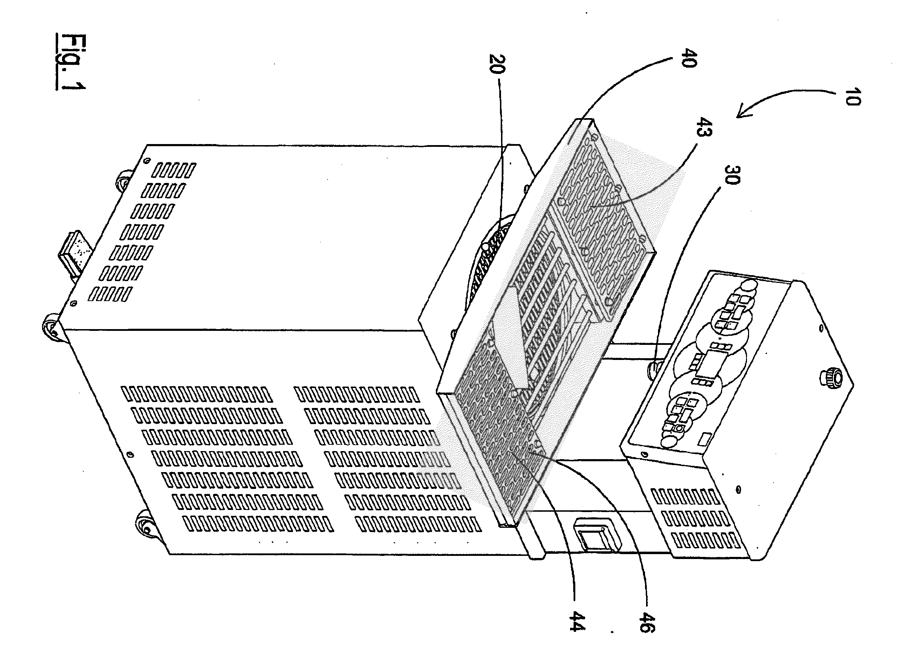

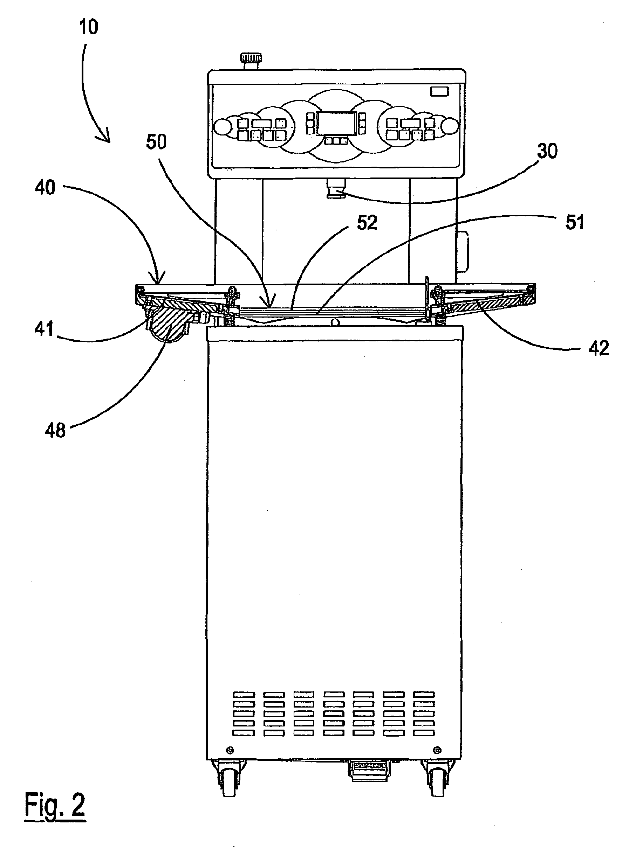

Figures 1 and 2 illustrate a chocolate tempering machine indicated as a whole with the reference number 10.

It comprises a tank 20 and a distribution spout 30, situated on the vertical line of the tank 20 and destined for supplying the jet of a tempered chocolate (not shown).

The jet of chocolate exits vertically and falls into the tank 20 by gravity.

The machine 10 comprises a vibrating support 40 destined for acting as a supporting surface for one or more moulds to facilitate their emptying, for the purposes discussed above.

According to the disclosures of the present invention, the vibrating support 40 comprises, in the example shown, a first and second heated surface 41, 42 tilting towards the tank 20, each of which is superimposed by respective portions of grating 43 and 44.

Each heated surface 41, 42 is tilted towards the tank, whereas the portions of grating 43, 44 are substantially horizontal; the lowest edge of the tilted surface 41, 42 surmounts the outer edge of the tank 20, so that a liquid situated on it is sent by gravity into the latter.

It should be noted that alternatively there can be only one tilted surface 41 or 42 and a respective soundproofing grating 43, 44.

Each grating 43, 44 rests on one side at the highest edge of the respective tilted surface 41,42, and it is supported, on the opposite side, by pins 61 in contact with the same tilted surface 41,42, so that the vibrations of the latter are uniformly transmitted to the grating 43,44.

In the present example, the grating is made soundproof by the presence of a perforated soundproofing element 45,46 (also part of the vibrating support 40) made of soft rubber superimposed and in contact with a respective portion of grating 43, 44.

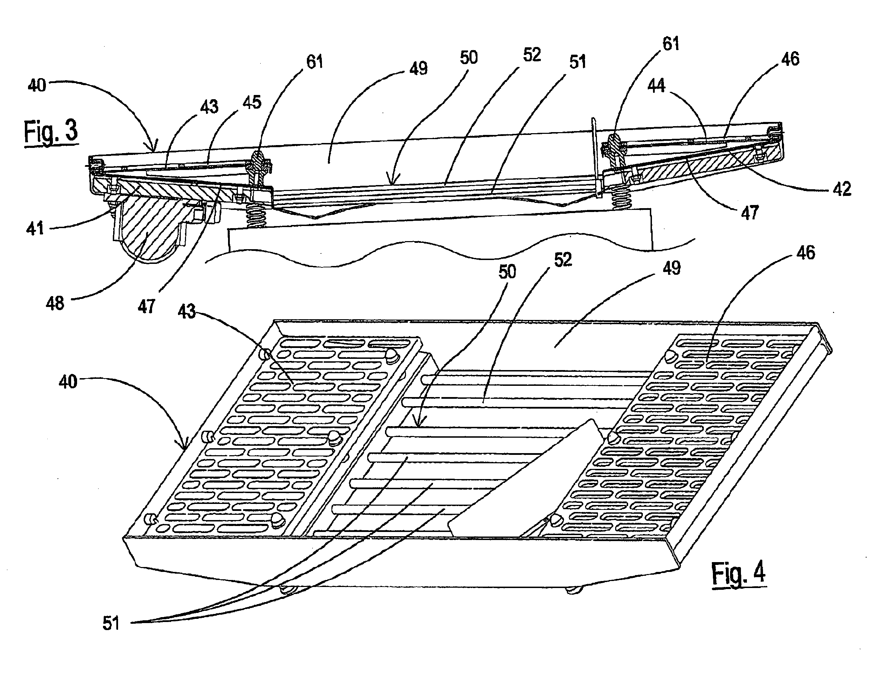

These parts can be seen in greater detail in figures 3 and 4, which show an enlargement of the vibrating support 40, in which, in figure 4, a grating 43 can be seen, without the relative perforated soundproofing element 45 and the perforated soundproofing element 46 that covers the other grating 44 (which cannot therefore be seen).

The holes, or more generally the slits or openings of the perforated soundproofing element 45, 46 preferably coincide with those of the grating 43, 44 beneath it, thus facilitating the passage of the chocolate and preventing any possible accumulations.

With reference to figures 1 and 2, it should be noted that the heated surfaces 41,42 (and relative gratings 43,44) are decentralized with respect to the distribution spout 30, or not on its vertical line.

Each of the surfaces 41,42 comprises a heating means, preferably an electric resistance, and even more preferably an electric sheet resistance, i.e. of the type that develops into a thin layer (sheet) comprising heating tracks made of copper or similar metal.

The electric resistances are preferably applied beneath each tilted surface 41,42 and a covering made of thermoinsulating material 47 is inserted between the two so that there is no possible contact of the rode resistance with an operator's hand.

It should be noted that in the preferred solution shown in the enclosed drawings, the two heated surfaces 41, 42 are operatively coupled with each other to guarantee a transmission of vibrations from one to another: this solution in fact envisages a single vibration generator 48, also part of the vibrating support 40, which is assembled in association with a heated surface 41.

The transmission of the vibrations is obtained thanks to both a frame 49, common to both surfaces 41, 42, and also by means of the heated grid 50, which extends between the two and connects them.

The grid 50 comprises a plurality of reciprocally interspaced rods 51, and is in a horizontal position so as to be at least partially below the spout 30.

The grid 50 is obviously positioned so that a jet of chocolate leaving the spout 30 passes into an empty space between two consecutive rods 51.

More specifically, at least a part of the grid 50 comprises rods 51 which all lie on the same horizontal plane, i.e. in planar and horizontal alignment with each other.

According to another advantageous aspect of the present invention, the grid 50 comprises at least one rod 52 close to the jet of chocolate, which is situated in a higher position with respect to the other rods 51.

In this way, the moulds positioned on the vibrating grid 50 are prevented from moving freely during functioning and finishing under the jet of chocolate.

The functioning and advantages of the machine 10 are already evident from the description provided above.

The vibrations generated by the generator 48, in fact, cause the detachment of the chocolate from the moulds resting on the perforated soundproofing elements 45,46: the chocolate that pours from the mould passes through the holes of the perforated elements 45,46 and through the corresponding holes of the gratings 43, 44, until it reaches the tilted surfaces 41, 42.

As the latter are heated, they do not allow the chocolate to solidify but keep it in a liquid state and send it by gravity towards the tank 20.

When the mould must be vibrated in order to compact the product, it is sufficient to position it on the soft rubber surface, whereas when it is to be emptied, it is sufficient to overturn it, leaving it resting on the corresponding perforated element 45,46 thus avoiding the unpleasant noise caused by the vibration of the mould on the metallic surfaces, present in the known machines.

Further perfectioning expedients or modifications to what has been described so far are obviously possible, all included in the present invention.

The gratings 43, 44, for example, can be extracted for cleaning thanks to a fork-release system of the pins 61.

The perforated soundproofing elements 45,46 can also be removed without any difficulty from their seat, in order to be cleaned.

The present invention consequently avoids the problem of noise indicated above and also allows the quantity of moulds produced contemporaneously to be increased.

Another advantage provided by the invention is that by also using the grid 50 together with the gratings 43,44, it is possible to operate with various moulds contemporaneously, adopting all of them for the operations and therefore increasing the productivity of the machine 10.

A further variant (not illustrated) envisages that the tilted surface (s) are not part of the vibrating support 40, but are fixed with respect to the latter.

In this case, the discharging of the chocolate pouring onto them is in any case guaranteed by the fact that these fixed tilted surfaces are heated and therefore keep the chocolate in liquid state.

In this case, the vibration generator 48 is connected at least to the gratings alone and/or to the grid 50 (if present), whereas it is positioned so as not to transmit vibrations to the heated tilted surfaces.

This solution also avoids the noise caused by the vibrations as the moulds or other objects to be emptied are situated above the vibrating soundproofing elements.

Finally, another variant envisages that the gratings themselves 43,44 are internally produced with only one soundproofing material, rather than with two layers, as described above.

The objectives mentioned in the preamble of the description have therefore been achieved.

The scope of the invention is defined by the following claims.

## Claims

1. A chocolate tempering machine (10) comprising at least one tank (20) and a distribution spout (30) situated on the vertical line of said tank (20) destined for distributing a jet of tempered chocolate, comprising a vibrating support (40) equipped with at least a first soundproofing grating (43) destined for supporting at least one product coated with tempered chocolate to facilitate the detachment of the chocolate from said product, **characterized in that** it also comprises at least a first heated surface (41) tilting towards said tank (20), said first surface (41) being superimposed by said first grating (43).

2. The chocolate tempering machine (10) according to claim 1, **characterized in that** said first tilted heated surface (41) is vibrating and part of said vibrating support (40).

3. The chocolate tempering machine (10) according to claim 1 or 2, **characterized in that** said vibrating support (40) comprises a second heated surface (42) tilting towards said tank (20), surmounted by at least a second grating (44).

4. The chocolate tempering machine (10) according to claim 1, 2 or 3, **characterized in that** said vibrating support (40) comprises a soundproofing perforated element (45,46) overlying and in contact with said first and/or said second grating (43,44).

5. The chocolate tempering machine (10) according to one or more of the previous claims, **characterized in that** at least one of said first and said second heated surfaces (41,42) is decentralized with respect to said distribution spout (30).

6. The chocolate tempering machine (10) according to one or more of the previous claims, **characterized in that** at least one of said first and said second heated surfaces (41,42) comprises a heating means preferably of the electric type.

7. The chocolate tempering machine (10) according to one or more of the claims from 3 to 6, **characterized in that** said first and said second heated surfaces (41,42) are operatively coupled at least for guaranteeing a transmission of vibrations between each other, and wherein said vibrating support (40) comprises at least one vibration generator (48) associated with one of said first and said second heated surfaces (41,42).

8. The chocolate tempering machine (10) according to one or more of the claims from 3 to 7, **characterized in that** said first and said second heated surfaces (41,42) are convergent towards said tank (20), each connected to a side end of a heated grid (50) comprising a plurality of rods (51) reciprocally interspaced, said grid (50) being positioned horizontally at least partially below said spout (30), so that a jet of chocolate leaving the latter passes into an empty space between two consecutive rods (51).

9. The chocolate tempering machine (10) according to the previous claim, **characterized in that** at least part of said grid (50) comprises rods (51) in planar and horizontal alignment with each other, and wherein said grid (50) also comprises at least one rod (52) close to said jet of chocolate situated in a higher position with respect to the rods (51) in planar and horizontal alignment with each other.

## Patentansprüche

1. Schokoladentemperiermaschine (10) mit zumindest einem Tank (20) und einem Verteilungsausguss (30), der auf der vertikalen Linie des Tanks (20) gelegen und dazu bestimmt ist, einen Strahl temperierter Schokolade zu verteilen, mit einem Schwingträger (40), der mit zumindest einem ersten Schallschutzgitter (43) ausgestattet ist, das dazu bestimmt ist, zumindest ein mit temperierter Schokolade beschichtetes Produkt abzustützen, um das Ablösen der Schokolade von dem Produkt zu erleichtert, **dadurch gekennzeichnet, dass** sie auch zumindest eine erste beheizte Fläche (41) umfasst, die in Richtung des Tanks (20) geneigt ist, wobei das erste Gitter (43) über der ersten Fläche (41) liegt.

2. Schokoladentemperiermaschine (10) nach Anspruch 1, **dadurch gekennzeichnet, dass** die erste geneigte beheizte Fläche (41) schwingt und Teil des Schwingträgers (40) ist.

3. Schokoladentemperiermaschine (10) nach Anspruch 1 oder 2, **dadurch gekennzeichnet, dass** der Schwingträger (40) eine zweite beheizte Fläche (42) umfasst, die in Richtung des Tanks (20) geneigt ist, über welcher zumindest ein zweites Gitter (44) montiert ist.

4. Schokoladentemperiermaschine (10) nach Anspruch 1, 2 oder 3, **dadurch gekennzeichnet, dass** der Schwingträger (40) ein perforiertes Schallschutzelement (45, 46) umfasst, das über dem ersten und/oder dem zweiten Gitter (43, 44) liegt und mit diesen in Kontakt ist.

5. Schokoladentemperiermaschine (10) nach einem oder mehreren der vorhergehenden Ansprüche, **dadurch gekennzeichnet, dass** zumindest eine von der ersten und zweiten beheizten Fläche (41, 42) mit Bezug auf den Verteilungsausguss (30) dezentral liegt.

6. Schokoladentemperiermaschine (10) nach einem oder mehreren der vorhergehenden Ansprüche, **dadurch gekennzeichnet, dass** zumindest eine von der ersten und zweiten beheizten Fläche (41, 42) ein Heizmittel umfasst, das bevorzugt vom elektrischen Typ ist.

7. Schokoladentemperiermaschine (10) nach einem oder mehreren der Ansprüche 3 bis 6, **dadurch gekennzeichnet, dass** die erste und die zweite beheizte Fläche (41, 42) funktional gekoppelt sind, zumindest um eine Übertragung von Schwingungen untereinander zu gewährleisten, und wobei der Schwingträger (40) zumindest einen Schwingungserzeuger (48) umfasst, der einer von der ersten und der zweiten beheizten Fläche (41, 42) zugeordnet ist.

8. Schokoladentemperiermaschine (10) nach einem oder mehreren der Ansprüche 3 bis 7, **dadurch gekennzeichnet, dass** die erste und die zweite beheizte Fläche (41, 42) zu dem Tank (20) hin konvergent sind, wobei eine jede mit einem Seitenende eines beheizten Rostes (50) verbunden ist, der eine Mehrzahl von Stäben (51) umfasst, die wechselseitig beabstandet sind, wobei der Rost (50) horizontal zumindest teilweise unterhalb des Ausgusses (30) angeordnet ist, so dass ein Schokoladenstrahl, der letzteren verlässt, in einen Zwischenraum zwischen zwei aufeinander folgenden Stäben (51) gelangt.

9. Schokoladentemperiermaschine (10) nach dem vorhergehenden Anspruch, **dadurch gekennzeichnet, dass** zumindest ein Teil des Rostes (50) Stäbe (51) in planarer und horizontaler Ausrichtung miteinander umfasst, und wobei der Rost (50) auch zumindest einen Stab (52) nahe bei dem Schokoladenstrahl umfasst, der in einer höheren Position mit Bezug auf die Stäbe (51) in planarer und horizontaler Ausrichtung miteinander gelegen ist.

## Revendications

1. Machine à tempérer le chocolat (10) comprenant au moins un réservoir (20) et une buse de distribution (30) située sur l'axe vertical dudit réservoir (20) destinée à distribuer un jet de chocolat tempéré, comprenant un support vibrant (40) équipé d'au moins une première grille d'insonorisation (43) destinée à supporter au moins un produit enduit de chocolat tempéré pour faciliter le détachement du chocolat dudit produit, **caractérisée en ce qu'**elle comprend aussi au moins une première surface chauffée (41) qui s'incline vers ledit réservoir (20), ladite première surface (41) étant couverte par ladite première grille (43).

2. Machine à tempérer le chocolat (10) selon la revendication 1, **caractérisée en ce que** ladite première surface chauffée inclinée (41) vibre et fait partie dudit support vibrant (40).

3. Machine à tempérer le chocolat (10) selon la revendication 1 ou 2, **caractérisée en ce que** ledit support vibrant (40) comprend une deuxième surface chauffée (42) qui s'incline vers ledit réservoir (20), surmontée d'au moins une deuxième grille (44).

4. Machine à tempérer le chocolat (10) selon la revendication 1, 2 ou 3, **caractérisée en ce que** ledit support vibrant (40) comprend un élément d'insonorisation perforé (45, 46) qui recouvre et est en contact avec ladite première et/ou ladite deuxième grille (43, 44).

5. Machine à tempérer le chocolat (10) selon l'une ou plusieurs des revendications précédentes, **caractérisée en ce qu'**au moins l'une desdites première et deuxième surfaces chauffées (41, 42) est décentrée par rapport à ladite buse de distribution (30).

6. Machine à tempérer le chocolat (10) selon l'une ou plusieurs des revendications précédentes, **caractérisée en ce qu'**au moins l'une desdites première et deuxième surfaces chauffées (41, 42) comprend un moyen de chauffage, de préférence du type électrique.

7. Machine à tempérer le chocolat (10) selon l'une ou plusieurs des revendications 3 à 6, **caractérisée en ce que** lesdites première et deuxième surfaces chauffées (41, 42) sont accouplées fonctionnellement au moins pour garantir une transmission de vibrations entre elles, et dans laquelle ledit support vibrant (40) comprend au moins un générateur de vibrations (48) associé à l'une desdites première et deuxième surfaces chauffées (41, 42).

8. Machine à tempérer le chocolat (10) selon l'une ou plusieurs des revendications 3 à 7, **caractérisée en ce que** lesdites première et deuxième surfaces chauffées (41, 42) convergent vers ledit réservoir (20), et sont connectées chacune à une extrémité latérale d'une grille chauffée (50) comprenant une pluralité de tiges (51) réciproquement espacées, ladite grille (50) étant positionnée horizontalement au moins en partie sous ladite buse (30), de sorte qu'un jet de chocolat sortant de cette dernière passe dans un espace vide entre deux tiges consécutives (51).

9. Machine à tempérer le chocolat (10) selon la revendication précédente, **caractérisée en ce qu'**au moins une partie de ladite grille (50) comprend des tiges (51) en alignement plat et horizontal les unes par rapport aux autres, et dans laquelle ladite grille (50) comprend aussi au moins une tige (52) proche dudit jet de chocolat, située en une position plus élevée par rapport aux tiges (51) en alignement plat et horizontal les unes par rapport aux autres.
